Europäisches Patentamt

(19) European Patent Office

Office européen des brevets

(11) Publication number: **0 121 261**
A2

(12) # EUROPEAN PATENT APPLICATION

(21) Application number: **84103602.3**

(22) Date of filing: **31.03.84**

(51) Int. Cl.³: **G 01 N 15/07**
**G 01 N 21/47, G 01 N 21/64**

(30) Priority: **05.04.83 US 482346**

(43) Date of publication of application:
**10.10.84 Bulletin 84/41**

(84) Designated Contracting States:
**BE DE FR GB IT NL SE**

(71) Applicant: **Becton, Dickinson and Company**
**Mack Centre Drive**
**Paramus New Jersey 07652(US)**

(72) Inventor: **Shoor, Bernard A.**
**147 Almendral Avenue**
**Ahterton Calif.(US)**

(74) Representative: **von Kreisler, Alek, Dipl.-Chem. et al,**
**Deichmannhaus am Hauptbahnhof**
**D-5000 Köln 1(DE)**

(54) **Method and apparatus for distinguishing subclasses of leukocytes in a sample.**

(57) A method for distinguishing multiple subpopulations of particles in a sample comprises passing particles in a sample, substantially one at a time, through an area of light detected at the particles. The volume of each particle is determined, preferably, as it passes through the area of focused light incident to the particles. Light scattered by each particle is detected as the particle passes through the area of light, over a wide angle relative to the direction of incident light. This method includes distinguishing different subpopulations of the particles by associating the determined volume of each particle with its detected light scatter. The simultaneous detection of particle volume, fluorescence and light scatter is determined in a single pass through flow cytometry equipment.

An apparatus for carrying out the abovedescribed method is also within the purview of the present invention.

EP 0 121 261 A2

Croydon Printing Company Ltd.

## METHOD AND APPARATUS FOR DISTINGUISHING
## SUBCLASSES OF LEUKOCYTES IN A SAMPLE

## BACKGROUND OF THE INVENTION

1. <u>Field of the Invention</u>. The present invention relates to a method and apparatus for distinguishing multiple subpopulations of particles in a sample by the simultaneous determination of particle volume, light scatter and fluorescence, and more particularly, concerns a method and apparatus for distinguishing subclasses of Leukocytes in a sample of blood by using flow cytometry techniques.

2. <u>Description of the Prior Art</u>. Flow analysis of particles has been employed in the determination of multiple characteristics of individual particles. This analysis is most useful in analyzing characteristics of cells for the collection of information which would be useful in areas of research, hematology, immunology and the like. The researcher is interested in determining specific characteristics of individual cells so that such cells may be classified, identified, quantified and perhaps sorted for further investigations or analysis. Although other cell characteristics may be determined by electronic means in flow analysis devices, three significant characteristics are cell volume, light scatter and fluorescence.

Measurement of cell volume by the well known Coulter principle provides volumetric distribution information with respect to those cells. For instance, a comparison of cell volume determined during an experiment with cells of known volumes may assist

-2-

the researcher in classifying the experimental cells. Inasmuch as electronic cell volume measurements have been relied upon for some period of time, many researchers have accumulated significant cell volume data for comparison and analysis purposes. Therefore, cell volume remains as one of the cell characteristics which offers the researcher significant meaningful data.

Similarly, and particularly with respect to cells, fluorescence is a characteristic which contributes to the identification, classification and further analysis of cells. In well known staining techniques, use of a typical biological fluorochrome conjugated with antigen or antibody binds the stain to certain cells. When the fluorochrome is excited, it will re-radiate or fluoresce usually in specific regions of the color spectrum. By using a proper optical system, each cell which has the affinity to the fluorescent tagging stain can be detected due to the fluorescence which it emits after being excited. Therefore, fluorescence is also a significant characteristic in the analysis of individual particles, and cells in particular.

Light scattered by cells has also been a parameter which researchers have relied upon to gain information about cells. Cells flowing through a well known flow cytometry device, employing an incident beam of light, scatters the light at a variety of angles. This scattered light has served as functions of cell shape, index of refraction, opacity, roughness and the like.

-3-

In determining multiple characteristics of particles in a flow analysis system, it is desirable to acquire multiple measurements relating to those characteristics for each cell simultaneously. By measuring multiple characteristics simultaneously, the electronic components of the system can be simplified. Specifically, with measurements being taken at substantially the same time, various delay circuits and storage of information for later use in the electronic analysis can be eliminated. Furthermore, it is possible to increase the particle analysis rate when simultaneous measurements of the desired parameters can be accomplished. The prior art teaches a number of different systems for measuring characteristics of particles flowing in a moving stream.

U.S. Patent No. 3,710,933 discloses an apparatus which measures cell volume through a Coulter-type orifice, and then measures scatter (relating to size) and fluorescence. However, these measurements are not made simultaneously since there is a time gap between the electronic cell volume measurement and the optical measurements relating to scatter and fluorescence.

In U.S. Patent No. 3,738,759, an epi-illuminating system measures characteristics of particles flowing in a dispersion. The flow of particles in the measuring zone is parallel to the optical axis. A wash-stream is provided to wash the dispersion away from the measuring zone. Characteristics of particles relating to light emitted or reflected by the

-4-

particles in the measuring zone are then analyzed. There is no provision for measuring cell volume in this invention.

Simultaneous measurement of fluorescence and cell volume is described in U.S. Patent No. 4,198,160. The flow of particles in this invention is parallel to the optical axis, and the liquid flow is then diverted at right angles to its flow direction through the measuring orifice. Measurement of fluorescence is made by directing light coaxially with the measuring orifice along the path of flow of the particles.

U.S. Patent No. 4,110,604 describes a particle density measuring system in which particles flowing in a stream are enveloped in a sheath fluid which focuses and confines the sample fluid (with particles) to the center of the flowing stream.

In an article entitled "A Proposal for an Automatic Multiparameter Analyzer for Cells (AMAC)," by Robert C. Leif, found in Automated Cell Identification and Cell Sorting, edited by George L. Wied, Academic Press, New York 1970, pages 131-159, the author discloses a multiparameter analyzer for cells in which cell volume and optical characteristics are analyzed. The author suggests episcopic illumination for the light measuring technique.

In Thomas, R.A., et al. "Combined Optical and Electronic Analysis of Cells With the AMAC Transducers," The Journal of Histochemistry and Cytochemistry, Volume 25, No. 7, pages 827-835, 1977, the authors describe a combined optical and electronic analysis system using an orifice with sensing electrodes at each end. The system is said to be capable of measuring fluorescence, opacity, and electronic cell volume simultaneously. The stream of particles is directed perpendicularly to the optical axis so that it intercepts a laser beam in the focal plane of the lens. Also, a long-working distance objective with a numerical aperture of 0.60 is used to gather the fluorescence emission. The authors, however, indicated that it should be feasible in the future to add light scatter as a fourth parameter in a simultaneous acquisition of data. They left open the question of whether the light scattering distribution can provide a group of definite descriptors.

In U.S. Patent No. 4,284,412, a method and apparatus is described for identifying and enumerating cells of a select subclass of lymphocytes in blood. This method and apparatus relies upon the acquisition of forward light scatter, right angle scatter and fluorescence to identify and emunerate cells of the specified subclass. Cells are passed through a flow cytometry flow cell through which light passes to stimulate the fluorescent antibody tagged on cells of the specified subclass. There is no provision in this invention for measuring cell volume.

Assessment of the state of the immune system of an individual generally requires the measurement of lymphocyte subpopulations. Granulocytes (granular leukocytes) and monocytes normally must be excluded from the sample to be analyzed in measuring the

-6-

lymphocyte subpopulation. Methods used at present for the identification of lymphocytes, in the analysis of human leukocyte subclasses, include the flow cytometry techniques, some of which have been described above. In particular, known flow cytometry devices have employed forward and right angle light scatter, perhaps in conjunction with fluorescence. Significant overlap between lymphocyte and monocyte populations has been observed using the presently known procedures leading to erroneously high lymphocyte counts. Accordingly, the need remains for improving the separation of lymphocytes from adjacent populations in order to enable more accurate identification of the various subpopulations of leukocytes obtained from a sample of blood.

One such improvement has been described in pending patent application, U.S. Serial No. 276,738, filed in the U.S. Patent and Trademark Office on June 24, 1981, and having a common assignee herewith. In the pending patent application, the improvement relates to a practical, feasible apparatus for simulataneously analyzing particle volume and light emission, such as fluorescence. The present invention is directed to a further improvement of the invention described in the just-mentioned patent application in order to more clearly distinguish subclasses of leukocytes, and more particularly distinguish lymphocytes from monocytes and granular leukocytes when making an assessment of the state of the immune system.

-7-

## SUMMARY OF THE INVENTION

The method of the present invention distinguishes multiple subpopulations of particles in a sample. This method includes passing particles in a sample, substantially one at a time, through an area of light directed at the particles. The volume of each particle is determined preferably, but not necessarily, simultaneously, as it passes through the area of light. Light scattered by each particle is detected, as it passes through the area of light, over a wide angle relative to the direction of light. Different subpopulations of particles are distinguished by associating the determined volume of each particle with its detected light scatter.

In a preferred embodiment of this aspect of the invention, the method distinguishes subclasses of leukocytes in a sample obtained from blood, such as distinguishing lymphocytes from monocytes and granular leukocytes. Leukocyte cells in the sample are passed, substantially one at a time, through an area of light provided by an incident beam of illumination directed at an axis substantially orthogonally to the direction of leukocyte flow. The volume of each cell is determined as it passes through the area of light by sensing variations in an electrical impedance associated with the cells during flow through the area. Light scattered by each cell is detected, as it passes through the area of light, over a wide angle relative to the axis of the incident beam of illumination. Different subclasses of

-8-

leukocyte cells are distinguished by associating the determined volume of each as a function of its detected light scatter.

In another embodiment of this aspect of the invention, particles, such as cells, are labeled with one or more marking agents. The marking agent is sensed as the particles pass through the area of light. Different subpopulations of particles are distinguished by simultaneously determining volume, detecting light scatter and sensing the marking agent associated with each particle.

In another aspect of the present invention, an apparatus distinguishes multiple subpopulations of particles in a sample. This apparatus includes means for passing particles in a sample, substantially one at a time, through an area of light directed at the particles. Means determines the volume of each particle, preferably as it passes through the area of light. Light scattered by each particle, as it passes through the area of light, is detected by detecting means over a wide angle relative to the direction of light. Means are provided for distinguishing different subpopulations of particles by associating the determined volume of each particle with its detected wide angle light scatter.

In another embodiment of this aspect of the invention, the apparatus distinguishes multiple subpopulations of particles in a sample, which particles have been labeled with a marking agent. Means are provided for simultaneously determining the presence of the marking agent on, volume of, and light scattered by, each particle as it passes through the area of light. Different subpopulations of particles are distinguished by means associating at least two of the three aforementioned parameters which have been determined.

In accordance with the principles of the present invention, a number of advantages and objectives are attained. Primarily, the present invention significantly improves the separation of subclasses of leukocytes, and in particular, distinguishes lymphocytes more clearly from adjacent monocytes and granular leukocytes. This significant improvement is achieved by use of cell volume measurements coupled to broad or wide angle light scatter associated with each cell. Further, and also significantly, the present invention provides for the simultaneous acquisition of data relating to cell volume, fluorescence and light scatter. Thus, in addition to relying on cell volume as a function of light scatter to distinguish subpopulations of particles, a third parameter, namely, flourescence, is detected which provides either a redundancy to assist in the distinguishing function or additional data to be fed to the computer or the like for analysis purposes. In addition, in the preferred embodiments to be described hereinafter, incoherent light sources such as mercury arc lamps may be utilized, as well as coherent light derived from such sources as lasers. It is expected that the apparatus of the present invention can be neatly packaged with minimal bench space required. Use and operation of the apparatus is practical and straight-forward while yet providing the advantages and objectives as described above.

## BRIEF DESCRIPTION OF THE DRAWINGS

Fig. 1 is a perspective view of the preferred embodiment of an analyzer for simultaneously determining volume, light scatter and light emission characteristics of particles particularly illustrating the liquid sampling console;

Fig. 2 is an enlarged cross-sectional view of the preferred flow manifold assembly of the present invention taken along line 2-2 of Fig. 1, and also illustrating the preferred condenser lens assembly employed in the optical arrangement of the present invention;

Fig. 3 is a schematic illustration of the liquid flow paths and particle volume measuring components of the analyzer of Fig. 1 also illustrating the light scatter collection optics;

Fig. 4 is an enlarged cross-sectional view of the preferred flow chamber employed in the analyzer of the present invention;

Fig. 5 is a schematic illustration of the optical elements and light paths particularly for simultaneously determining volume, fluorescence and light scatter characteristics of particles flowing through the flow chamber;

Fig. 6 is an enlarged cross-sectional view of

-11-

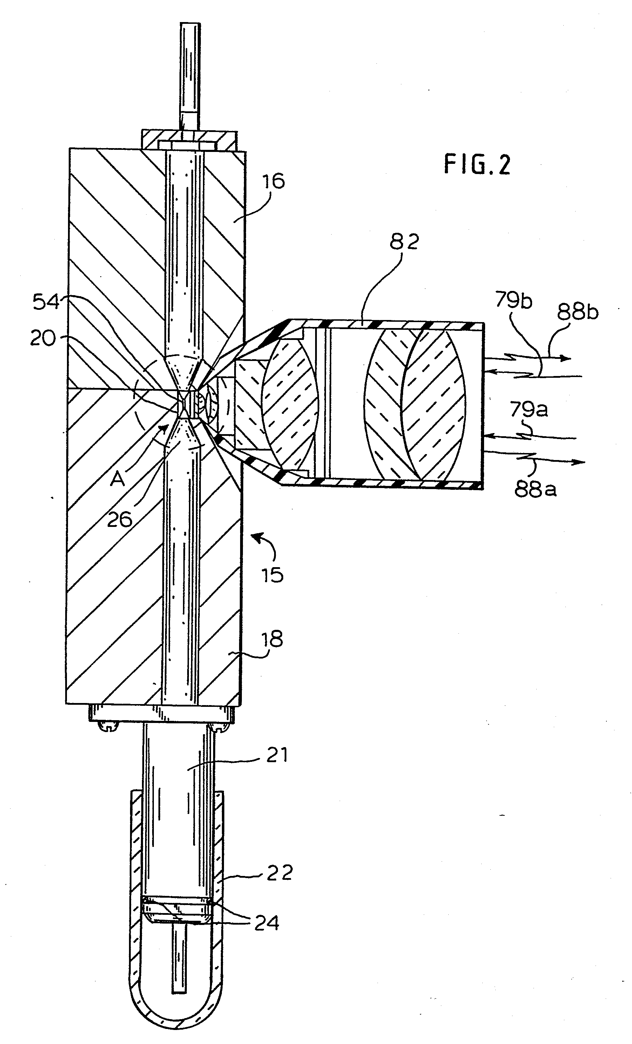

the flow chamber marked as detail A in Fig. 2 illustrating the simultaneous determination of particle volume and fluorescence of particles passing through the flow chamber;

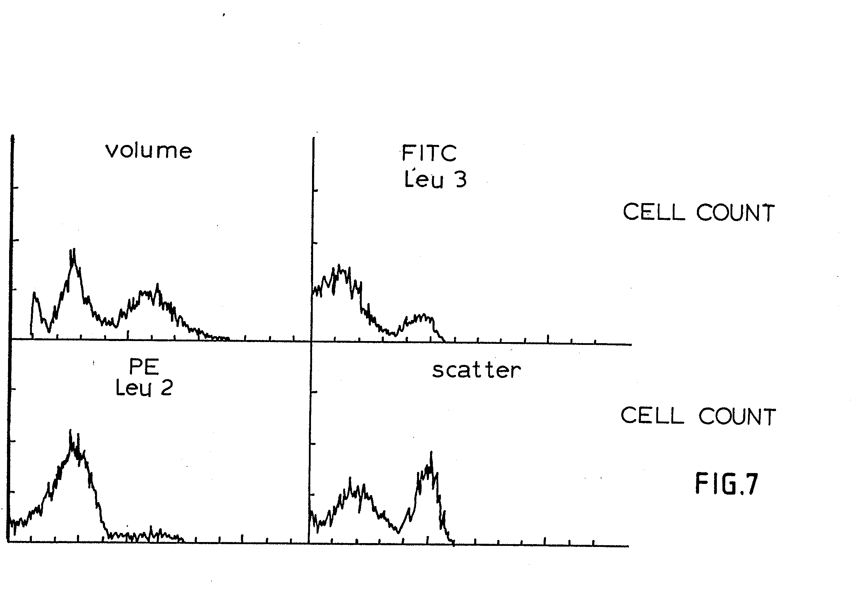

Fig. 7 is a graphic illustration of four parameters, namely, volume, light scatter and two fluorescence characteristics shown as functions of cell count;

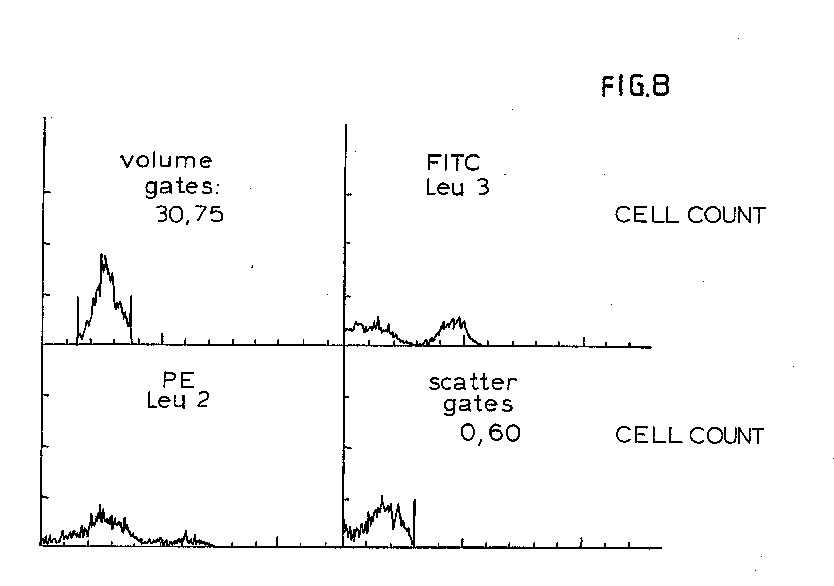

Fig. 8 is a graphic illustration similar to Fig. 7, except that the volume and light scatter have been gated to exclude cells in the peripheral regions thereof;

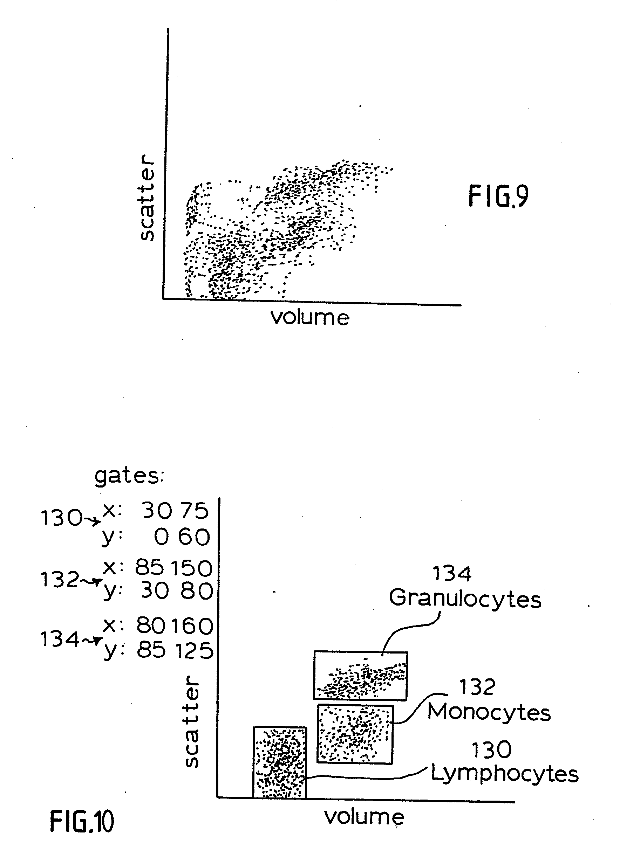

Fig. 9 is a graphic illustration of a cell study showing light scatter as a function of volume with no gating involved;

Fig. 10 is a graphic illustration similar to Fig. 9, except with gating of light scatter and volume as shown gated in Fig. 8 thereby showing lymphocytes clearly separated from monocytes and granulocytes; and

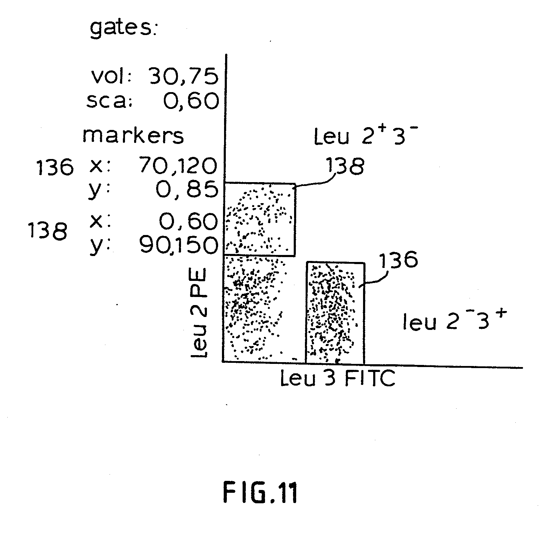

Fig. 11 is a graphic illustration of a cell study of one fluorescence as a function of the second fluorescence, and relying on gated valves of light scatter and volume to display different subpopulations of cells.

## DETAILED DESCRIPTION

While this invention is satisfied by embodiments in many different forms, there is shown in the drawings and will herein be described in detail a preferred embodiment of the invention, with the understanding that the present disclosure is to be considered as exemplary of the principles of the invention and is not intended to limit the invention to the embodiment illustrated. The scope of the invention will be measured by the appended claims and their equivalents.

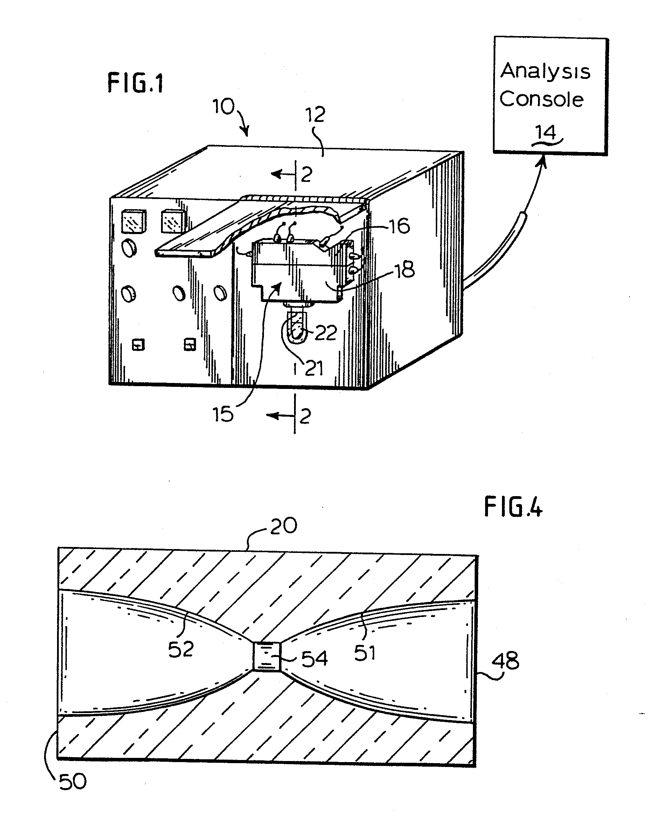

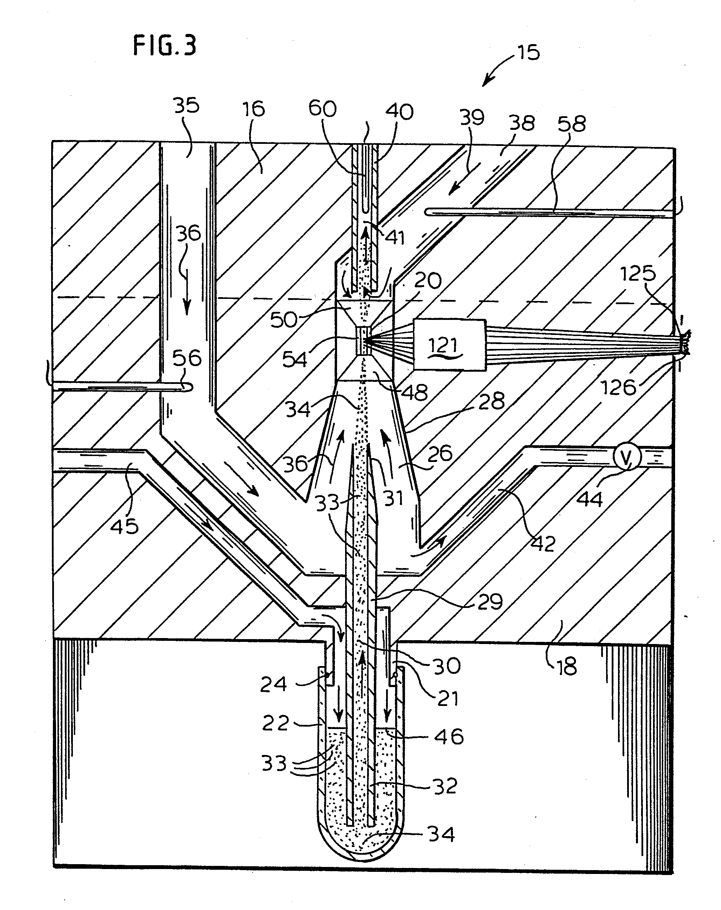

Adverting to the drawings, and Figs. 1 and 2 in particular, there is illustrated the preferred analyzer 10 of the present invention for simultaneously determining volume, light scatter, preferably at wide angles, and light emission characteristics of particles, fluorescence being the preferred light emission characteristic to be analyzed. In particular, analyzer 10 includes a liquid sampling console 12 which is constructed to contain the particle volume, light scatter and fluorescence measuring components, as hereinafter described, but which is separate from the analysis console 14. It will be pointed out hereinafter that analysis console 14 includes the electrical components, display screens and other data information regarding the control and function of the analyzer herein. The liquid sampling console as seen in Fig. 1 includes a flow manifold assembly 15 which is designed to provide a stream of flowing liquid containing the particles to be analyzed. Flow manifold 15 is preferably fabricated in two parts, an upper portion 16 and a lower portion 18. These portions are separable so that a liquid flow chamber 20 may be inserted and removed, for interchangeability, within

-13-

the flow paths inside the flow manifold assembly.  A sample injection manifold 21 in the embodiment being described depends downwardly so that a container 22 carrying the particles to be analyzed may be inserted thereon. An 0-ring 24 is included on sample injection manifold 21 to assure a liquid-tight fit between the injection manifold and the container.  The details of flow manifold assembly 15 will be better understood by referring now to Fig. 3 which is a schematic representation of the components and function of the flow manifold assembly.

As seen in Fig. 3, flow manifold assembly 15 includes a main flow cavity 26 which is normally substantially larger in diameter than flow chamber 20.  To facilitate smooth, laminar flow, the main flow cavity includes a tapered segment 28 converging toward flow chamber 20.  Depending into main flow cavity 26 is a sample tube 29 with a lumen 30 extending therethrough.  Tube 29 also includes a tapered segment 31 which tapers toward flow chamber 20.  In order to provide proper flow and avoid mixing of the sampling liquid and sheath liquid, tapered segment 31 is positioned inside the main flow cavity to leave a short space between its end and flow chamber 20.  The opposite end 32 of the sample tube extends beyond injection manifold 21 so that it will be submerged inside sampling liquid 34 within container 22.  The sampling liquid includes particles 33 dispersed throughout which are to be analyzed.  As previously mentioned, 0-ring 24 provides a fluid-tight seal between sample injection manifold 21 and liquid container 22.

-14-

A channel 35 communicates with main flow cavity 26. Liquid is delivered to the main flow cavity through channel 35 to serve as an outer sheath for particles flowing in the liquid stream. An appropriate liquid connection is made between the entry of channel 35 and the liquid sampling console when the flow manifold assembly is mounted therein. The sheath liquid 36 is generally pressurized, for example at 25 in. (63 cm.) $H_2O$, and typically flows through channel 35 at a rate of 1-2 ml. per minute. Sheath liquid 36 should be substantially particle free so that it does not interfere with the analysis of particles 33 from sampling liquid 34; also, sheath liquid 36 should be capable of carrying an electrical current so that a potential can be applied across the orifice of the flow chamber, as will hereinafter be described. A saline solution is desirably utilized as the sheath liquid.

On the side of the flow chamber 20 opposite from main flow cavity 26, another channel 38 is provided in flow manifold assembly 15. Channel 38 is in fluid communication with the outlet end of flow chamber 20. A secondary sheath liquid 39 flows through channel 38 normally at a slightly lower pressure than the flow of sheath liquid 36 in channel 35. Once again, a saline solution is desirably employed as secondary sheath liquid 39. A waste tube 40 is positioned inside the flow manifold assembly so that it is in fluid communication with channel 39 and so that its interior end is adjacent the outlet end of flow chamber 20. A lumen 41 extends completely through waste tube 40.

A drain channel 42 communicates with main flow cavity 26 and includes a valve 44 which is normally closed during the main flow of liquid through the manifold assembly. Drain channel 42 is provided to drain liquid from the manifold assembly after the flow operations have been completed, and also allows a reverse flow of liquid through flow chamber 20 and main cavity 26 in order to dislodge any particles or other impediments which may be causing a blockage therein. To this end, sheath liquid flow inside the manifold assembly is terminated, and valve 44 opened to drain the liquid contents from the assembly. Air may then be injected through the assembly from channel 38 while valve 44 is opened. This helps clean the system while purging it of particulate matter which may be undesirable.

Another flow channel 45 extends through flow manifold assembly 15 and terminates in an opening 46 in sample injection manifold 21 alongside sample tube 29. When container 22 with particles 33 and sampling liquid 34 therein is connected to the sample injection manifold, pressurized air, from a source in liquid sampling console 12, is delivered through channel 45. Normally, the air is delivered through channel 45 at a slightly higher pressure than that of sheath liquid 36. Under this air pressure, sampling liquid 34 is driven through lumen 30 of the sample tube upwardly (in the embodiment being described, and as seen in Fig. 3) toward main flow cavity 26. As sampling liquid 34 exits tapered end 31 of the sampling tube, there is a confluence between the

-16-

sampling liquid and the sheath liquid. A coaxial, bi-component liquid stream is formed, preferably at velocities in the laminar flow region. It can be seen that the sampling liquid containing the particles to be analyzed forms the inner component of the flowing liquid stream. By the time the stream of liquid enters flow chamber 20, there is substantial equilibration in the velocities of the sheath liquid and the sampling liquid. Moreover, particles 33 in the inner sampling liquid flow in the center of the liquid stream, and are maintained away from the walls of the orifice as pointed out hereinafter. Thus, this flow arrangement minimizes the possibilities of particles contacting the walls of the flow chamber. It is appreciated that the various pressures and flow rates can be adjusted by controls on the liquid sampling console. A typical sample flow rate is in the range of 5-50 microliters per minute of sampling liquid through the sampling tube. Furthermore, the air pressure in channel 45 can be adjusted to control the count rate of particles through the flow chamber. Typically, the count rate would range between 100 and 1,000 particles per second flowing through the flow chamber. The design of main flow cavity 26 and the positioning of sample tube 29 therein is intended to offer minimal flow resistance to the bi-component stream of liquid as it flows toward flow chamber 20.

Light scatter collection lens 121 and light scatter aperture 125 are schematically illustrated on Fig. 3 to demonstrate the general function and location of the light scatter optics. The details of the light scatter optics will be provided hereinafter.

-17-

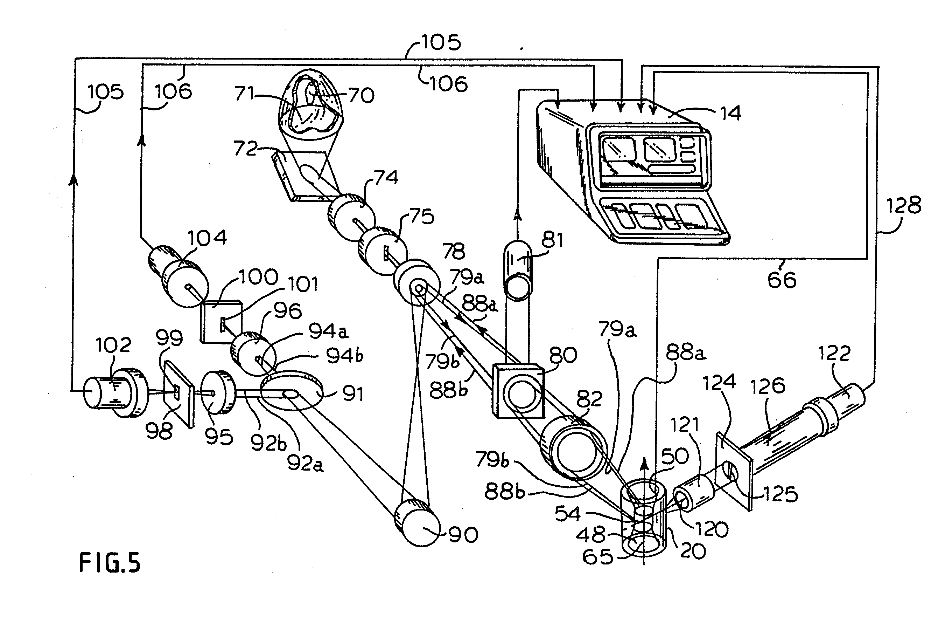

Referring now to Fig. 4, taken in conjunction particularly with Fig. 3, the preferred embodiment of flow chamber 20 is illustrated. It can be seen that flow chamber 20 is preferably cylindrically shaped with a passageway extending therethrough. There is an inlet opening 48 and an outlet opening 50 on opposite ends of the flow chamber. A smooth tapering recess 51 communicating with inlet opening 48 extends inwardly inside flow chamber 20; on the other side of the flow chamber, a smooth tapering recess 52 communicating with outlet opening 50 extends inwardly inside the flow chamber. Interconnecting recesses 51 and 52 to establish a liquid flow path is a small diameter orifice 54. This orifice is preferably concentrically positioned within the flow chamber so that it lies on the longitudinal axis thereof. Orifice 54 preferably has a circular cross-section and has a short cylindrical length running parallel to the longitudinal axis of flow chamber 20. It is understood, however, that the longitudinal length of orifice 54 may vary according to many factors for analyzing particles, and that the cross-sectional shape of the orifice may take on geometrical configurations other than circular. Also, while recesses 51 and 52 are depicted as preferably smooth, curving surfaces tapering inwardly toward orifice 54, other configurations may be utilized, for example, a straight taper from the wider inlet and outlet openings toward the smaller diameter orifice inside the flow chamber. For illustrative purposes only, a typical flow chamber might have an outside diameter of approximately 4mm. and an orifice diameter ranging from 0.05-0.15 mm. The length of the orifice in the longitudinal direction might be 0.102 mm., whereas the overall length of the flow chamber might be 4.70 mm. It can, therefore, be seen that some resistance to the flow of liquid through flow chamber 20 will develop as the flowing liquid passes through orifice 54.

The configuration of the flow chamber thus permits the utilization of the well known Coulter principle. According to this principle, when a non-conductive particle passes through an orifice containing an electrically conductive medium, there will be an increase in the electrical impedance or resistance at the orifice. By applying an electrical potential to the orifice, it is possible to measure the impedance increase as an electrical pulse. A proportional correlation has been established between the volume of the particle passing through the orifice and the amplitude of the electrical pulse measured as that particle traverses the orifice. In order to apply the potential across the orifice, a negative electrode 56 is positioned in fluid channel 35 so that sheath liquid 36 contacts electrode 56. On the other side of flow chamber 20, a positive electrode 58 is positioned within channel 38 so that secondary sheath liquid 39 therein contacts the positive electrode. By passing an electrical current through the electrodes, a potential is established across orifice 54. In the embodiment being described, a third electrode 60 is positioned in lumen 41 of waste tube 40. Electrode 60 serves as a
sensing electrode wherein the instantaneous voltage
on the sensing electrode is proportional to the
resistance or impedance change measured across the
orifice as each particle passes thereby. Sensing
electrode 60 measures the potential at the end of
waste tube 40. No electrical current flows in waste
tube 40, and the particles therein no longer are
affected by the electrical field. Actually, sensing
electrode 60 measures the resistance between the
orifice and the negative electrode. Accordingly,
even though a separate sensing electrode 60 is
provided, it is not necessary for this invention
inasmuch as sensing electrode 60 could also serve as
the positive electrode in setting up the electrical
field across the orifice of the flow chamber. While
the electrodes establish an electrical potential
across the orifice, it is preferable to locate the
electrodes out of the region of the flow chamber to
assure that any bubbles generated at the electrodes
are kept away from the orifice.

Returning now to Fig. 3, the bi-component
liquid stream flows from main flow cavity 26 through
inlet opening 48 and through orifice 54 in a coaxial
flow arrangement. As each particle 33 in the sampling liquid traverses orifice 54, the resistance at
the orifice is changed. By measuring this change of
resistance with respect to each particle, the volume
of the particle can be determined. The pulse
amplitude relating to resistance increase across the
orifice can be displayed on analysis console 14 or

-20-

other data collecting or displaying equipment.
Furthermore, the information regarding particle
volume may be stored in a computer for later analysis
or retrieval. The electrical components employed to
measure, display and store information with respect
to particle volume are well known. One such system
is described in U.S. Patent No. 4,110,604.

After flowing through flow chamber 20, the
stream of liquid is collected in waste tube 40. The
purpose of secondary sheath fluid 39 is to assure
liquid flow directly into waste tube 40. By effectively moving the particles out of the sensing area
into the waste tube, various eddy or swirling
currents are eliminated which otherwise might cause
false pulses in the sensing region. As in the entry
end of flow-chamber 20,-the-exit end, channel 38 and
waste tube 40 are designed to provide smooth, laminar
flow of the liquid from the sensing region as it is
collected in the waste tube.

With this liquid flow arrangement as described
above, the volume of particles passing through the
orifice can be efficiently determined. At the same
time that particle volume is being determined, the
optical aspects of the present invention provide for
the measurement of light scatter and light emitting
characteristics of those particles. Accordingly, as
each particle passes through the orifice of the flow
chamber, a simultaneous determination of volume,
light scatter and light emission can be made. Fig. 5
represents a schematic illustration of the preferred
optical components of the present invention which

-21-

permits the simultaneous measurement of light scattering and light emitting characteristics of the particles simultaneously with the measurement of particle volume.

For purposes of the ensuing discussion regarding the specific components of the embodiment being described herein, it will be assumed that some particles, if not all, in the sampling liquid will have an affinity for a light emitting tagging material such as fluorochrome. In the embodiment being described, the tagging material for the particles has fluorescent characteristics, and for exemplary purposes, the fluorescent material is subject to excitation in the blue/green region of the color spectrum and re-radiation or fluorescence occurs in the green/red region of the color spectrum. For illustrative purposes, the optical components will be described with respect to these exemplary color regions. It is appreciated, however, that different optical components may be employed in the present invention depending upon the tagging material utilized. For instance, the tagging material may become excited and fluoresce in different color regions; also, the tagging material may exhibit phosphorescence or other light emission instead of fluorescence. Turning to the schematic illustration of Fig. 5, particles, such as leukocytes or other cells, to be analyzed are seen passing along flow line 65 through orifice 54. As each particle passes through the orifice, its volume is determined by means of the Coulter principle as previously described with the measurements being directed to analysis console 14 as illustrated along electrical flow line 66. Each particle is simultaneously analyzed for light scatter and light emitting characteristics by the optical components of this invention.

Inasmuch as fluorescent tagging materials for the particles are commonly excited with ultraviolet light, the preferred excitation light source of the present invention is one which delivers incoherent light particularly in the ultraviolet range. Light source 70 is preferably a 100 watt mercury compact arc lamp. This mercury arc lamp emits a number of lines covering the ultraviolet through yellow color regions. It is understood that other incoherent light sources may also be utilized in the present invention. Furthermore, coherent light sources, such as lasers, may also be employed. Some of the filter elements to be described hereinafter may be eliminated when using a laser which generates light over a narrow wavelength and can be selected at the color of choice for exciting the fluorescent tagging material. For purposes of the present invention, however, a laser is not now preferred due generally to its excessive bulk, and special power and cooling water requirements, which the mercury arc lamp does not need.

Surrounding the mercury arc lamp 70 is an ellipsoidal reflector 71 which receives all or a substantial fraction of, the light from the lamp. The ellipsoidal reflector concentrates a larger solid angle of the light from the lamp. Although a lens
could be employed for improving image quality, the
ellipsoidal reflector is preferred because it is
independent of wavelength whereas a lens would be
wavelength dependent unless a multi-element lens
system is used. Light is then transmitted from
ellipsoidal reflector 71 to a cold mirror 72. The
cold mirror is typically a glass structure with
transparent thin films, alternating high and low
refractive indices such that short wavelengths are
reflected and long wavelengths are transmitted
therethrough. These longer wavelengths, typically
the red and infrared, are associated with heat.
Therefore, the transmission of these longer wavelengths eliminates some of the heating effects
generated from the lamp. Although not illustrated,
two or more cold mirrors could be employed to reduce
long wavelength transmissions to about one percent
and also to fold the optical path in the packaging of
the optical components.

From the cold mirror the transmitted light
from the lamp passes through a series of excitation
filters 74. Depending upon the fluorescent tagging
material on the particles, the band of wavelengths is
selected to excite the fluorescent tagging material
which is blue/green in the embodiment being described. The excitation filters discriminate
against background fluorescence and block light at
wavelengths of the fluorescent tagging material since
the mercury arc lamp will generally emit light in a
broad spectrum covering the wavelengths of fluorescence expected from the particles. After passing

-24-

through the excitation filters, the light transmitted from the lamp passes through a slit member 75. The slit member eliminates background excitation and helps focus and limit excitation to the area of orifice 54 inside flow chamber 20 where particles are being analyzed. It can be seen in Fig. 5 that slit member 75 includes a rectangularly shaped slit 76 which generally conforms to the rectangular cross-section of orifice in the plane orthogonal to the optical axis. It is preferred that slit member 75 be made of brass with slit 76 electrochemically etched therein. After passing through slit 76, the transmitted light is directed to an excitation beam splitter 78. Preferably, excitation beam splitter 78 is a dichroic filter. In the embodiment being described, the dichroic filter is an efficient transmitter of light in the wavelengths for delivering excitation energy to the particles; on the other hand, the dichroic filter is an efficient reflector of light emitted from the particles in the fluorescence color region. As an example, excitation beam splitter 78 will efficiently transmit blue/green light toward the particles for excitation thereof, while efficiently reflecting green/red light which is emitted from the particles after being excited. As seen in Fig. 5, the transmitted light path is designated by lines 79a-79b.

Light transmitted through excitation beam splitter 78 then travels to beam splitter 80. The beam splitter samples about four percent of light independent of wavelength. This four percent, or other small percentage, is then reflected to the excitation light monitor 81 which monitors the light passing through slit 76. Excitation light monitor 81 establishes a photocurrent proportional to light intensity. The output of excitation light monitor is directed to the electronics within analysis console 14. In essence, the excitation light monitor serves as a feed-forward compensation of fluorescence gain; for example, if the emission intensity through the slit decreases, the fluorescence intensity of the fluorescent tagging material on the particles will also decrease. In order to provide a modality of constancy during the measurement procedure, the excitation light monitor signals a sensor unit fluorescence preamplifier in the analysis console to proportionally increase the gain for the fluorescent pulses at the console if the original transmitted signal from the lamp has become weakened. Inasmuch as the lamp may drift with time, age, flicker or the like, the utilization of the excitation light monitor provides a mechanism to compensate for these abnormalities.

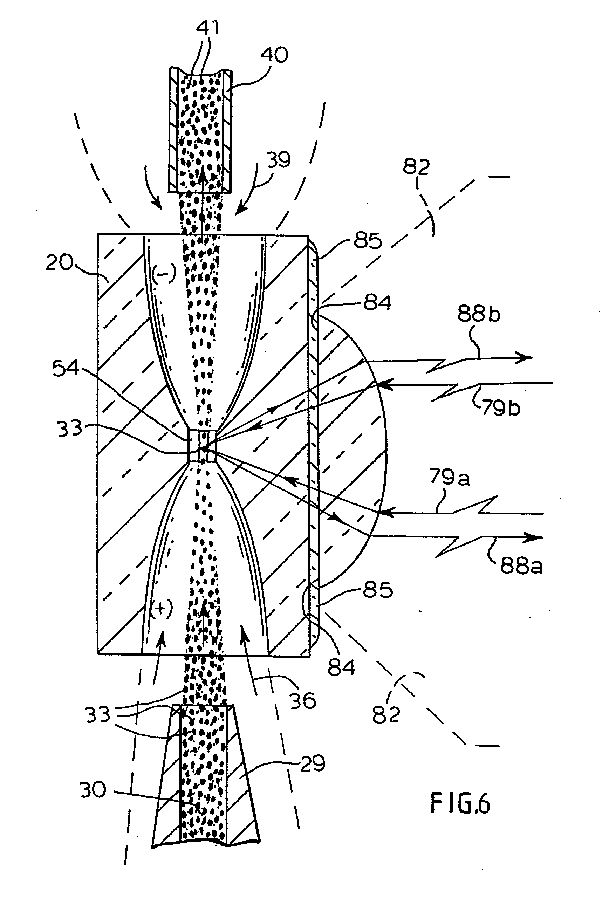

Most of the light from excitation beam splitter 78 passes through beam splitter 80 and enters condenser lens assembly 82. The purpose of condenser lens assembly 82 is to focus the excitation light onto orifice 54 in flow chamber 20. Figs. 2 and 6, taken in conjunction with Fig. 5. illustrate the optical flow paths of both excitation and fluorescence, as well as the liquid stream of particles 33 flowing through the flow chamber so that particle volume can be determined. Light scatter determination cannot be seen in Figs. 2 and 6 because the light scatter detection elements are preferably substantially at a right angle to the incident beam of light. Condenser lens assembly is preferably an epi-illuminating system which uses the same lens for imaging excitation light and for receiving fluorescence emission from the particles. As seen particularly in Fig. 6, the coaxial stream of liquid flowing into chamber 54 maintains the particles in the center of liquid flow so that they are not close to the wall surrounding the orifice where a distorted electrical signal due to non-uniform electric field distribution may occur. With this centrally confined coaxial flow, the particles are confined to a very narrow region of uniform illumination. Therefore, condenser lens assembly 82 is preferably positioned so that the leading lens face 84 is positioned directly against the outside diameter of flow chamber 20. A thin layer of index matching medium, such as glycerol 85 is applied to the interface of lens and flow chamber to provide effective ultraviolet transmission while eliminating any intrinsic fluorescence effects. This layer of glycerol also allows the lens assembly to be moved slightly, if necessary, for finer adjustment and focus. To account for the distance between leading face 84 and the longitudinal axis of flow chamber 20 which passes through orifice 54, condenser lens assembly 82 requires a compatible working distance in order to focus properly on the centrally confined particles in the orifice. For exemplary purposes, the working distance of the embodiment being described is approximately 2.03 mm.; however, by reducing the diameter of flow chamber 20, it may be possible to minimi e the working distance to about 0.25 mm. Inasmuch as the normal working distance for typical high magnification microscopes is typically less than 0.25 mm., the condenser lens assembly of the present invention has been designed to provide for the greater than normal working distance for this kind of lens arrangement. In addition, for maximum light collection from the particles, it is desirable to make the numerical aperture of the lens assembly as large as possible, while minimizing spherical aberration effects of the lens. For purposes of the present invention, it is preferable, although not necessary, to utilize a numerical aperture greater than 1.0.

As seen by particularly referring to Fig. 2, the condenser lens assembly includes a plurality of lens elements which provide the aforementioned features. Furthermore, it is also preferred that the condenser lens assembly provide low loss transmission in wavelengths from 350 nanometers, in the near ultraviolet region, to 650 nanometers, in the visible red region. It is also desirable that the lens assembly provide a resolution of 0.1 micrometers or less blur circle at the object plane in order to provide reasonably sharp edges on a 50 micrometer slit. This resolution should be maintained over the aforementioned 350 nanometer to 650 nanometer spectral range. It is also preferred that low intrinsic

-28-

fluorescence materials be incorporated in the fabrication of the condenser lens assembly. It is appreciated that the lens materials, size, curvatures and arrangements can be varied to provide the abovedescribed features. Of course, inasmuch as the lens system is an epi-illuminating structure, the lens system is designed to account for the color corrections for the excitation and fluorescence ranges.

As seen particularly in Fig. 6, excitation light, designated by light paths 79a-79b, is transmitted through the wall of flow chamber 20. Actually, excitation light 79a-79b is funneled through condenser lens assembly and assumes a cone-shaped configuration. The point of such cone of light is truncated so that a flat, rectangular beam cross-section representing a slit-image is formed inside the orifice thereby providing a region of high light intensity in the path of particles or cells in the flow stream. Typically, a high conveyence beam subtending a large solid angle, with an apex half-angle of approximately 45° with respect to the axis of the light beam is used to provide high energy concentration in the measurement area. The flow chamber is thereby fabricated from a material which is transparent to the wavelengths of both excitation, fluorescence and other light reflection and scattering off the particle that is in the illuminated region. Furthermore, the material for the flow chamber should be electrically non-conductive and most desirably should exhibit a low native, intrinsic fluorescence to keep background fluorescence (noise) to a minimum. While there are a number of transparent materials which may be used, such as quartz, and different types of glass, it is preferred that the flow chamber be fabricated from fused silica. Therefore, excitation light is focused on each particle 33 as it passes through orifice 54. Those particles which have the affinity for the fluorescent tagging material will rapidly become excited when the excitation energy reaches those particles. Once excited, fluorescence occurs in a color region, such as green/red, which is different from the excitation color region of blue/green. This fluorescent particle will then emit fluorescence back through the wall of flow chamber 20 and into condenser lens assembly 82 along the optical flow paths, schematically designated as 88a-88b. Any fluorescence which the particles emit will occur in all directions, with perhaps thirty percent being collected by the condenser lens assembly.

Returning to Fig. 5, fluorescence or re-radiated light travels through condenser lens assembly 82 and through beam splitter 80. A small percentage of re-radiated light, such as four percent, is lost through beam splitter 80 due to the reflective characteristics thereof. The reflected re-radiated light is captured into a baffle (not shown) so that light noise is kept to a minimum. As the re-radiated light reaches excitation beam splitter 78 the reflective properties of this dichroic filter cause a reflection of light in the re-radiated wavelengths, such as the green/red region. So that the re-radiated light from the particles is efficiently and effectively captured, excitation beam splitter 78 is oriented in the packaged assembly so that it is angularly displaced along the optical axis of re-radiated light. While the angle of orientation of the excitation beam splitter may vary, it is preferred to maintain the excitation beam splitter as close as possible to being perpendicular to the optical axis of re-radiated light. Of course, the excitation beam splitter could not be truly perpendicular to the re-radiated optical axis since the light would be reflected back into the condenser lens. On the other hand, with larger angles of orientation, such as between 30 and 45 degrees or larger, the sharpness of the transition from transmitted to reflected light decreases; therefore, instead of capturing only light in the green/red region of the color spectrum, greater amounts of overlapping color regions will be reflected. This decreases the intensity of the desirable color region. With this in mind, excitation beam splitter is oriented so that it is angled preferably less than ten degrees from the plane perpendicular to the optical axis of re-radiation.

After being reflected by the dichroic parameters of the excitation beam splitter, the re-radiated light is directed to a spherical mirror 90. Spherical mirror 90 is preferably included to achromatically fold the optical path for packaging purposes; if there are no constraints on packaging, the spherical mirror could be eliminated. In the embodiment being described, where compactness of the package is desirable, the spherical mirror will allow the excitation and blocking filters (hereinafter described) to be located physically close together so that one module may be packaged. In this fashion the entire filter module might be readily removed and interchanged when different fluorescent color tagging materials are used in analyzing particles.

From spherical mirror 90 the re-radiated light from the particles is directed to another dichroic mirror 91 in the embodiment being described. The purpose of dichroic mirror 91 is to separate two different colors traveling along the re-radiated light path so that they can be analyzed separately. It is understood that the inclusion of dichroic mirror 91 is merely a preferred embodiment inasmuch as the re-radiated light from spherical mirror 90 can be analyzed without being further separated. The inclusion of dichroic mirror 91, therefore, demonstrates the flexibility of the present invention in providing analysis of the fluorescence in one or more color regions. Thus, dichroic mirror 91 would be selected to separate, for exemplary purposes only, the green from the red regions of the color spectrum. Wavelengths in the red region would be reflected along optical path 92a-92b, while wavelengths of the green region would be transmitted through dichroic mirror 91 along optical path 94a-94b. It is appreciated that other colors can be separated by the dichroic mirrors, such as the separation of the blue from the green regions.

-32-

The reflected light 92a-92b passes to a barrier filter 95 which is designed to transmit wavelengths of only one color region, in this instance, red. Barrier filter 95, therefore, is adapted to block wavelengths of the green region which may be reflected from dichroic mirror 91. Also, there may be some wavelengths from the blue, excitation region which have been bounced off the particles and are included in the re-radiated light. Barrier filter 95 is also designed to block this back scatter of blue light to thereby eliminate background noise which is clearly undesirable. Similarly, a barrier filter 96 is provided along green optical path 94a-94b. Barrier filter 96 is designed to allow wavelengths of the green region to pass through, while blocking extraneous red light which may be transmitted through dichroic mirror 91. Back scatter of blue light along this path is also blocked by barrier filter 96 thereby eliminating or minimizing background noise traveling along this path. It is also possible to provide for fluorescence compensation in the electronic circuitry at analysis console 14. If any of the fluorescence bands, either red or green, or other colors which may be used, tend to overlap, the electronics can be designed to subtract a proportional signal which is due to the wrong color band which may be picked up in the fluorescence detector.

Slit member 98 and 100 are provided along the respective optical paths so that light passes through slits 99 and 101, respectively. Slits 99 and 101 are

-33-

similar to slit 76 in slit member 75; the former slits permit the photodetector to "see" only the two-dimensional area of orifice 54 in flow chamber 20 where the excitation beam impinges on the stream of particles flowing therethrough. These slits, therefore, eliminate diffuse background light which the photodetector receives. Slits 99 and 101, for example, may be electrochemically etched holes in brass sheets.

Two fluorescence detectors 102 and 104 are provided to receive the two separated light paths, in the case being described, red and green. These fluorescence detectors are conventional photomultipliers which convert optical signals into electrical signals. These electrical signals are then fed along electrical lines 105 and 106, respectively, to analysis console 14, where the electrical signals are processed by the electronics therein for analysis purposes. Various displays, information presentation, accumulation or recordation may be provided in the analysis console. The electrical components to provide analysis of the electrical signal relating to fluorescence may include state of the art technology and may vary according to the level of sophistication of the analysis and data presentation.—One such electrical system for fluorescence determinations is described in U.S. Patent No. 3,826,364.

Fig. 5 also illustrates the elements of the present invention which comprise the light scatter optics. As mentioned above, light striking particles flowing through flow chamber 20 will be scattered in many directions. Accordingly, in the broadest sense of the invention, the light scatter optics herein may be oriented to capture this scattered light in any direction, whether it be forward of the incident light beam, backward of the beam or any intermediate angle. Preferably, it has been found that better separation of subclasses of cells, particularly leukocytes, can be achieved if the light scatter is detected at a wide angle relative to the incident beam of illumination.

To satisfy the preferred arrangement, the light scatter elements, as hereinafter described, are positioned on an axis 120 which is substantially orthogonal, or at a right angle, to the direction of particle flow through the flow chamber represented by flow line 65. Light scatter optics' axis 120 is positioned also substantially orthogonally, or preferably at a right angle, relative to the incident beam of illumination. Light scattered by particles passing through flow chamber 20 goes in all directions. It thus is possible to detect this scattered light over as much as 360° . However, collection of scattered light over a wide angle, to the extent practicable and feasible, is within the purview of the present invention. As used herein, this wide angle detection represents an angle over the range of 10° to 170° relative to the incident beam of illumination. Within this wide angle range, the present invention performs most satisfactorily when the light scatter optics detect scattered light over an angular range between 65° and 115° relative to the axis of the incident beam of illumination.

A light scatter collection lens 121 is positioned adjacent to or near the flow chamber so that it is aligned with orifice 54 through which the particles pass. The actual positioning of light scatter collection lens 121 may be similar to the arrangement of condenser lens assembly 82 adjacent the flow chamber as described in conjunction with Figs. 2 and 6 hereof. It is the purpose of the light scatter lens to gather light scattered by the particles and focus this light into the light detector 122. To this end, the accuracy of this light scatter collection is improved by an image aperture member 124. As seen in Fig. 5 image aperture member 124 includes an aperture 125 in the form of a slit through which scattered light travels toward light detector 122. The image aperture member is mounted in the image plane of the light scatter collection lens and serves to block noise-generating background light while allowing substantially only the scattered light from the particles or cells to pass through the aperture. Scattered light from the particles is normally relayed through light scatter relay optics 126 which may take on many different forms such as an optical fiber bundle or the like. From relay optics 126, scattered light is directed to the detector 122 which is preferably a photomultiplier tube similar to detectors 102 and 104. It is the purpose of detector 122 to collect light scattered by the particles and convert those optical signals into electrical signals which are fed along electrical line 128 to analysis console 14.

-36-

Results of the operation of the present invention are illustrated in Figs. 7-11 which represent some of the advantageous features of the present invention for distinguishing subpopulations of particles in a sample. For instance, a sample of whole human blood obtained from a donor may be prepared in known fashion to either eliminate or isolate the red cells so that the analysis of the remaining leukocytes and other cells can be performed. Prior to subjecting the leukocyte cells to the flow cytometry techniques for analysis, the leukocytes are labeled with two appropriate immunofluorescent stain such as fluorescein isothiocyanate (FITC) which is adapted to fluoresce when excited to provide emission spectra in the green region of the color spectrum and phycoerythrin (PE) which is adapted to fluoresein when excited to provide emission spectra in the orange region of the color spectrum.

Upon running this sample through a flow cytometry device such as the analyzer described herein, and accumulating data relating the volume, fluorescence and light scatter characteristics of the individual cells, this information is used to distinguish the different subclasses of leukocytes. As mentioned above, in analyzing the state of the immune system, attention is focused at the lymphocyte subpopulations; granulocytes and monocytes have to be excluded from this analysis. As illustrated in Fig. 7, four parameters, all related to cell count, are shown as single histograms; volume, light

-37-

scatter and the two fluorescence levels have been displayed. It can be seen in Fig. 7 that one subclass of leukocytes, generally referred to as leu 2, has been labeled with PE, while a second subclass of leukocytes has been labeled with FITC, as mentioned above. Using a four channel display in the analyzer as described herein, information relating to volume, light scatter and the two fluorescence characteristics can be displayed in a single presentation to the user.

Fig. 8 illustrates the same information obtained with respect to Fig. 7, except that peripheral regions of volume and light scatter have been gated. As a result, the graphic representations of volume and light scatter appear as truncated versions of the same parameters shown in Fig. 7, with the peripheral regions, both low and high, being excluded from the representations of Fig. 8. On the other hand, both of the fluorescence displays of Fig. 8 show different curves from Fig. 7 because only those leu 2 and leu 3 cells falling within the gated regions of light scatter and volume have been counted. Thus, a more focused analysis of these cells can be achieved by virtue of the gating features.

Instead of the histogram approach, Figs. 9 and 10 illustrate "dot plot" representations of the light scatter and volume parameters of the cells, preferably simultaneously obtained by the analyzer device described above. In Fig. 9, the dots, representative of individual cells, show the distribution of light

-38-

scatter as a function of volume for all cells studied from the sample. While it is evident that the cells or dots have clustered in three, or perhaps four, different areas, there is also some merging or blending evident. This is due to the fact that, when all cells are studied over the entire range of volume and light scatter detected, there is some overlap along the borders of the areas which makes differentiation of the areas more difficult.

To overcome this overlap or blending at the borders of the areas of dots, the gating of light scatter and volume, as described in conjunction with Fig. 8, above, has been employed. By referring now to Fig. 10, it can be seen that many dots previously seen in Fig. 9 have been eliminated. These dots have been excluded from the plot of light scatter versus volume by gating the three areas along the x and y axes as indicated in Fig. 10. Once the peripheral dots in the so-called overlapping regions have been eliminated, it becomes most practical to isolate, identify and distinguish the various subclasses of leukocytes. For instance, the group of dots designated by numeral 130 is representative of the lymphocyte subpopulation in the sample; the group of dots designated by numeral 132 is representative of the monocyte subpopulation in the sample; and the group of dots designated by numeral 134 is representative of the granulocyte subpopulation in the sample. With this clear separation and distinction of the subclasses of leukocytes, the present invention enables more accurate identification of the various subpopulations.

Further, and as illustrated in Fig. 11, those leukocytes in the sample that have been labeled with FITC and PE, preferably simultaneously with their respective volume and light scatter parameters, are shown as "dot plots" of the two fluorescence parameters. The leu 2 and leu 3 cells labeled with the respective immunofluorescent stains are illustrated in conjunction with the previously described gating features of volume and light scatter. Thus, subclasses of leu 2 and leu 3, designated by numerals 136 and 138, respectively, can be isolated more definitively by relying on simultaneously acquired information of volume, light scatter and two fluorescence parameters. More information is thereby available to the user for distinguishing the various subpopulations of cells.

Thus, the present invention provides a method and apparatus for distinguishing multiple subpopulations of particles in a sample. Most significantly, the present invention is useful for measuring human leukocyte subclasses by flow cytometry techniques using cell volume and light scatter. Moreover, the volume, fluorescence and light scatter characteristics of individual cells may be acquired, preferably simultaneously, so that meaningful data are available to analyze, separate and identify various subpopulations of cells in a sample.

WHAT IS CLAIMED IS:

1.   A method for distinguishing subclasses of leukocytes in a sample obtained from blood comprising:

passing leukocyte cells in said sample, substantially one at a time, through an area of light provided by an incident beam of illumination directed at an axis substantially orthogonally to the direction of leukocyte flow;

determining the volume of each cell as it passes through said area by sensing variations in an electrical impedance associated with the cells during flow through said area;

detecting light scattered by each cell, as it passes through said area, over a wide angle relative to the axis of the incident beam of illumination; and

distinguishing different subclasses of the leukocyte cells by associating the determined volume of each cell as a function of its detected light scatter.

2.   The method of Claim 1 wherein said cells are passed through a transparent flow chamber having an orifice therethrough whereby the variations in electrical impedance are sensed when the cells flow through said orifice.

3.   The method of Claim 2 wherein said cells are passed in a bi-component stream of liquid through said orifice, said stream having a particle free outer sheath liquid capable of carrying an electrical current and a coaxially arranged inner liquid containing said cells.

4. The method of Claim 1 wherein light scattered by each cell is detected at a wide angle ranging between 65° and 115° relative to the axis of the incident beam of illumination.

5. The method of Claim 4 wherein light scattered by each cell is detected on an axis substantially 90° relative to the axis of the incident beam of illumination.

6. The method of Claim 1 wherein said distinguishing step includes the distinguishing of lymphocytes from monocytes and granular leukocytes.

7. The method of Claim 1 wherein said passing step includes providing a beam of incoherent illumination to said flowing cells.

8. The method of Claim 1 which further includes:
labeling the leukocytes in said sample with a fluorochrome having a predetermined flourescence response to specific optical stimulation provided by said beam of illumination;
detecting the fluorescence emitted by the fluorochromes as said cells pass through said area of light; and

distinguishing different subclasses of the leukocyte cells based on the fluorescence, volume and light scatter associated with each cell.

9. The method of Claim 8 wherein the fluorescence emitted by each cell is determined simultaneously with the determination of cell volume and the detection of light scattered by each cell.

10. A method for distinguishing multiple subpopulations of particles in a sample comprising:
passing particles in a sample, substantially one at a time, through an area of light directed at said particles;
determining the volume of each particle;
detecting light scattered by each particle, as it passes through said area, over a wide angle relative to said direction of light; and
distinguishing different subpopulations of said particles by associating the determined volume of each particle with its detected wide angle light scatter.

11. The method of Claim 10 wherein the volume of each particle is determined as it passes through said area.

12. The method of Claim 10 which further includes labeling said particles with a marking agent, sensing the marking agent on particles passing through said area, and distinguishing different

-43-

subpopulations of particles by simultaneously determining volume, detecting light scatter and sensing
the marking agent associated with each particle.

13. The method of Claim 12 wherein said
labeling step includes labeling said particles with a
plurality of different marking agents, and sensing
the different marking agents to distinguish different
subpopulations of said particles.

14. A apparatus for distinguishing subclasses of leukocytes in a sample obtained from blood
comprising:
    an electrically-sensitive orifice;
    means for moving leukocyte cells in said
sample, substantially one at a time, in a flow path
through said orifice to cause electrical signals to
be generated relating to the volume of said cells;
    means for providing an incident beam of
illumination on an axis substantially orthogonally to
the direction of said cell flow through said orifice;
    means for detecting light scattered by each
cell, as it passes through said area, over a wide
angle relative to the axis of the beam of illumination; and
    means for distinguishing different subclasses
of leukocyte cells by associating the electrical
signals relating to the volume of each cell as a
function of its detected light scatter.

15. The apparatus of Claim 14 wherein said
orifice is in a transparent flow chamber.

-44-

16. The apparatus of Claim 15 which includes a pair of electrodes, each positioned on opposite sides of said orifice for generating a potential thereacross.

17. The apparatus of Claim 14 wherein the means for providing said beam of illumination is a source of incoherent light.

18. The apparatus of Claim 17 wherein said providing means provides a light beam substantially conically configured as it is directed toward said orifice.

19. The apparatus of Claim 17 wherein said light source is a mercury arc lamp.

20. The apparatus of Claim 14 wherein said means for detecting scattered light detects such light at an angle ranging between 65° and 115° relative to the axis of the incident beam of illumination.

21. The apparatus of Claim 20 wherein said means for detecting scattered light detects such light on an axis substantially at 90° relative to the axis of the incident beam of illumination.

22. The apparatus of Claim 14 wherein said means for detecting includes a photomultiplier device capable of converting optical signals into electrical signals.

-45-

23.    The apparatus of Claim 22 wherein said means for detecting further includes a light scatter collection lens positioned near said orifice for focusing light scattered by said cells toward said photomultiplier device.

24.    The apparatus of Claim 23 wherein said means for detecting further includes an image aperture positioned in the image plane of said light scatter collection lens between said lens and said photomultiplier device.

25.    The apparatus of Claim 14 which further includes means for detecting fluorescence emitted by excited fluorochromes associated with said cells.

26.    The apparatus of Claim 25 wherein said means for distinguishing associates the fluorescence, volume and wide angle light scatter of each cell in a simultaneous determination.

27.    The apparatus of Claim 25 wherein said means for detecting fluorescence includes a photodetector device capable of detecting light in a specific region of the color spectrum.

28.    The apparatus of Claim 14 wherein said means for distinguishing includes display means for indicating the detected volume and light scatter distribution of leukocyte cells in the sample.

29.    An apparatus for distinguishing multiple subpopulations of particles in a sample comprising:

means for passing particles in a sample, substantially one at a time, through an area of light directed at said particles;

means for determining the volume of each particle;

means for detecting light scattered by each particle, as it passes through said area, over a wide angle relative to said direction of light; and

means for distinguishing different subpopulations of said particles by associating the determined volume of each particle with its detected wide angle light scatter.

30. An apparatus for distinguishing multiple subpopulations of particles in a sample which particles have been labeled with a marking agent comprising:

means for passing said labeled particles in a sample, substantially one at a time, through an area of light directed at said particles;

means for simultaneously determining the presence of the marking agent on, volume of, and light scattered by, each particle as it passes through said area; and

means for distinguishing different subpopulations of particles based on the association of at least two of the above-determined parameters.

FIG.1

10

12

Analysis Console

14

2

16

18

22

21

15

2

FIG.4

20

52

54

51

48

50

FIG.2

FIG.3

FIG.5

0121261

FIG.6

FIG.7

0121261

FIG.8

volume gates: 30,75

FITC Leu 3

CELL COUNT

PE Leu 2

scatter gates 0,60

CELL COUNT

0121261

FIG.9

scatter

volume

gates:

130→ x: 30 75
y: 0 60

132→ x: 85 150
y: 30 80

134→ x: 80 160
y: 85 125

134
Granulocytes

132
Monocytes

130
Lymphocytes

scatter

volume

FIG.10

gates:

vol: 30,75
sca: 0,60

markers

136 x: 70,120
y: 0,85

138 x: 0,60
y: 90,150

Leu 2$^+$3$^-$

138

136

leu 2$^-$3$^+$

Leu 2 PE

Leu 3 FITC

FIG.11